# EUROPEAN PATENT APPLICATION

(11) **EP 1 205 357 A2**
(43) Date of publication of application: **15.05.2002**
(21) Application number: 01204036.6
(22) Date of filing: 24.10.2001
(51) Int. Cl.: B60R 9/045

(54) **Roofrack constituted from modular elements**

(30) Priority: 24.10.2000 NL 1016468
(71) Applicant: Van den Born, Marcus Philippus Adrianus, 5145 NR Waalwijk (NL)
(72) Inventor: Van den Born, Marcus Philippus Adrianus, 5145 NR Waalwijk (NL)
(74) Representative: Eveleens Maarse, Pieter

(57) **Abstract**

The invention relates to a roof-rack (1) for a motor vehicle, comprising:
- two structures (3) extending in longitudinal direction,
- a number of transverse elements (4) which extend between the structures (3) and which are connected to the structures (3) by means of fastening elements, and
- supports (5) connected to the structures (3) or the transverse elements (4) for fixing the roof-rack (1) on the motor vehicle, wherein the fastening elements are fastened releasably to the structures (3).

As a result of these measures it is possible to easily release the fastening elements and fasten them to the structures at another position, whereby the distances between the transverse elements can be adjusted.

## Description

The invention relates to a roof-rack for a motor vehicle, comprising:
- two structures extending in longitudinal direction,
- a number of transverse elements which extend between the structures and which are connected to the structures by means of fastening elements, and supports connected to the structures or the transverse elements for fixing the roof-rack on the motor vehicle.

NL-A-6 803 800 for instance shows such a roof-rack. Such a roof-rack has fixed dimensions. It is however generally possible to displace the supports relative to the roof-rack to enable placing of the roof-rack on diverse types of cars or vans.

There is nevertheless a need for a roof-rack wherein not only the fastening points but also the dimensions can be changed, and wherein the distance between the transverse elements can be adjusted.

The invention has for its object to provide such a roof-rack.

This object is achieved in that the fastening elements are fastened releasably to the structures.

As a result of these measures it is possible to easily release the fastening elements and fasten them to the structures at another position, whereby the distances between the transverse elements can be adjusted.

Another advantage of the invention is to be found in the avoidance of welded connections.

According to a first preferred embodiment the fastening elements can be changed from a fixation position, in which they are fixedly connected to the structures, into a sliding position in which they are movable along the structures.

This measure enables displacing of the transverse elements from the one position to the other without disconnecting them completely.

A structurally attractive embodiment results when the structures comprise a profile extending in longitudinal direction, wherein the fastening elements extend into the profile and can be fixed in a random position on the profile. A very great measure of flexibility is hereby obtained.

According to yet another preferred embodiment the fastening elements each comprise an anchor which extends into the profile, and each of the fastening elements comprises a tensioning element which is connected to the relevant transverse element and which is adapted for pulling the anchor towards it. A simple construction is also obtained here, wherein fixation is possible at any random position in the profile extending in longitudinal direction.

The use of hollow transverse elements, together with the measure that the tensioning element is situated in the transverse element, wherein the tensioning elements comprise a control element which can be operated from outside the transverse element and which, when operated, pulls the anchor towards the fastening element, provides a further degree of flexibility; it is after all possible here to shorten transverse elements to a random length, to arrange the tensioning elements herein and to achieve the fixation on the longitudinally extending structure by operation from outside.

According to yet another preferred embodiment the tensioning elements comprise a sleeve which can be placed into an opening arranged in the transverse element and wherein the control element comprises a bolt which is displaceable in the sleeve by means of screw thread and which is coupled mechanically to the anchor such that the anchor is pulled towards the bolt when the bolt is tightened.

The construction is hereby simplified even further, since arranging an opening in the transverse element is an operation which can be easily performed, while use is made of standard elements for fastening.

In order to save weight and to obtain sufficient weather resistance, it is attractive when the transverse elements are formed by an extruded aluminium profile.

A particularly attractive embodiment teaches that the vertical rods of the structures extending in longitudinal direction are formed by the same aluminium profiles as the transverse elements, wherein the transverse elements are connected to the longitudinally extending profiles in the same manner as the vertical rods.

For the profiles extending in longitudinal direction use is preferably also made of an extruded aluminium profile, this however being a profile differing from the profile of the transverse elements.

Other attractive preferred embodiments are stated in the remaining sub-claims.

The present invention will be elucidated hereinbelow with reference to the annexed figures, in which:
figure 1 is a perspective view of a delivery van on which a roof-rack according to the invention is placed;
figure 2 is a perspective view of a roof-rack according to the invention wherein the structures extending in longitudinal direction are separated from the elements extending in transverse direction; and
figure 3 is an exploded view of a detail of the roof-rack construction according to the invention.

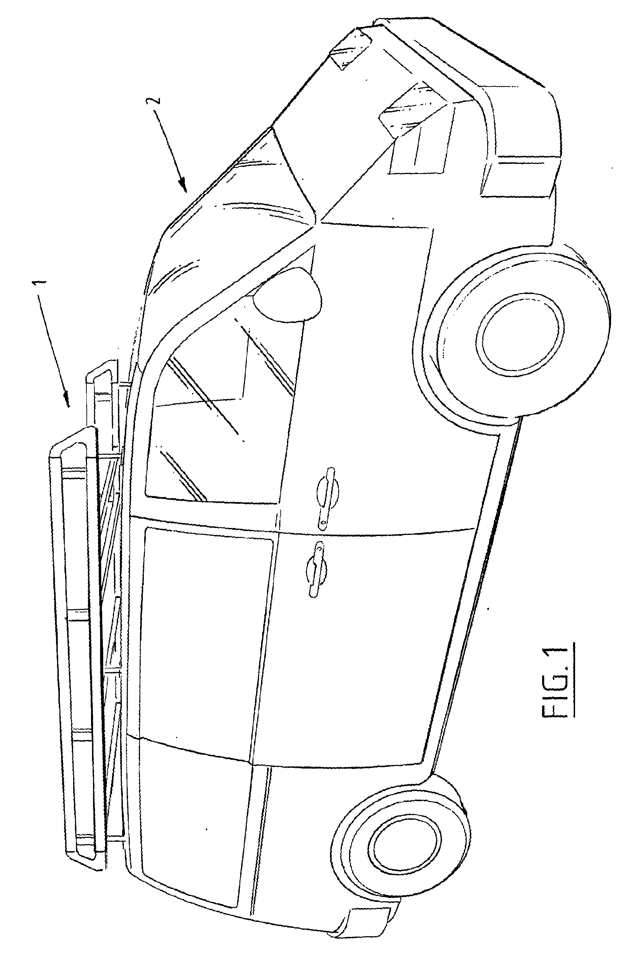

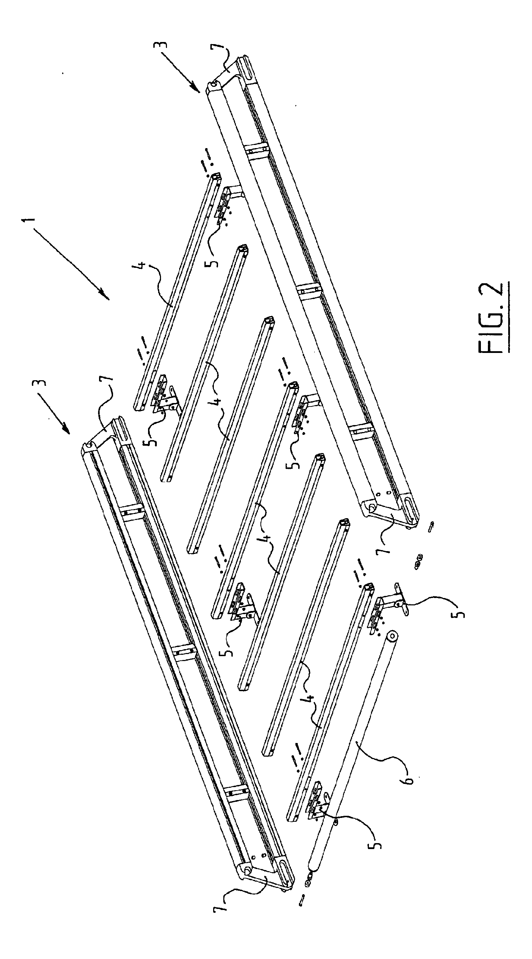

As is apparent from figure 1, a roof-rack 1 is placed on a delivery van 2. As shown in figure 2, roof-rack 1 is formed by two longitudinally extending structures 3 which are connected by transversely extending transverse elements 4. In the embodiment shown in figure 2, supports 5 are arranged on three transverse elements 4 for fastening the roof-rack on the roof of delivery van (2).

In order to facilitate placing of long objects, such as ladders, on the roof-rack, there is arranged on the rear side of the roof-rack a roller 6 which is mounted in two end parts 7 forming part of the longitudinally extending structure 3.

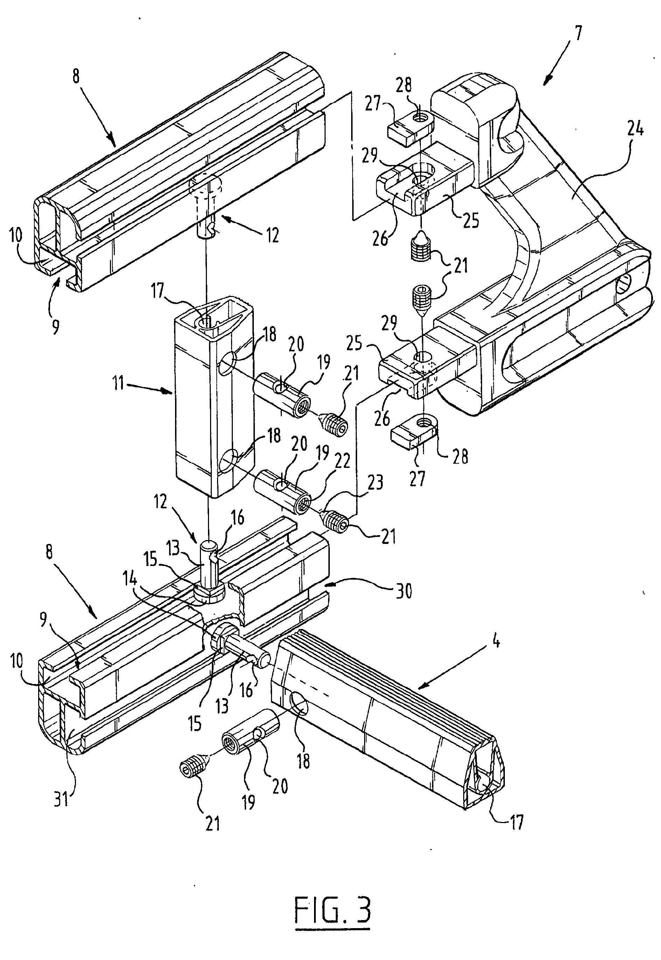

The construction will now be further elucidated with reference to figure 3.

Figure 3 shows that the structure 3 extending in longitudinal direction is formed by two longitudinally extending profiles 8, which are mutually identical and which are placed with their flat side toward each other.

Arranged on the relevant flat side of the aluminium profile is a slot 9 which leads to a cavity 10. Both aluminium profiles 8 are connected by vertical profiles 11 so as to provide sufficient strength.

Profile parts 11 are fastened by means of anchors 12. Anchors 12 are each formed by a pin 13 to which a head 14 is attached, and wherein a square 15 is placed between head 14 and pin 13, thereby preventing rotation of the anchor. A conical notch 16 is made in the pin.

A channel 17 is arranged in profile 11 to guide pin 13. After shortening the piece of aluminium profile 11, a hole 18 is drilled at a distance from both ends of the profile, in which hole is pushed a sleeve 19. Like anchor 12, sleeve 19 is preferably manufactured from stainless steel. In sleeve 19 is arranged an opening 20, the diameter of which is slightly larger than that of pin 13.

During assembly the profile part 11 with the sleeves 19 placed therein is placed onto profile 8, wherein an anchor 12 has been placed beforehand in cavity 10 of profile 8. The pin 13 of anchor 12 will herein extend into channel 17 and through opening 20. Cavity 16 is herein visible from the interior of sleeve 19. Fixation then takes place by screwing a headless screw 21 into sleeve 19. A screw thread 22 is arranged for this purpose in the interior of the sleeve. The headless screw 21 is provided on its front side with a tip 23. As the headless screw 21 is screwed in, the tip 23 thereof will herein move into conical opening 16. The dimensioning of the components is herein such that, as screw 21 is tightened, the tip 23 thereof pulls anchor 12 toward sleeve 19. A firm clamp connection is herein obtained between profile part 11 and profile 8. Upper profile 8 is of course fastened in the same manner to the parts of vertical profile 11.

A sturdy construction is hereby obtained. It is essential here that it is possible to displace the profile parts 11 in longitudinal direction by loosening the headless screws 21. Fixation can be obtained by then re-tightening.

For finishing of the ends of the profiles 8 placed one above another use is made of plastic end pieces 24. The plastic end pieces are constructed symmetrically, so that they can be used at both the front and rear and on both left and right of the roof-rack. For fixing in profile parts 8 each of the end pieces is provided with two tongues 25 which are dimensioned to extend into cavities 10 of profiles 8. Recesses 26 are arranged in tongues 25. Into recesses 26 can be placed metal pressure pieces 27 which are provided with a hole 28 in which screw thread is arranged.

Fastening then takes place by screwing headless screws 21 through holes 29 arranged in the tongues, which screws engage in the screw thread of opening 28. When the end pieces are subsequently pushed with their tongues 25 into cavity 10, it is possible by means of an Allen key to tighten the headless screws 21 via slot 9, whereby the tip of headless screws 21 locks against the underside respectively the upper side of channel 10, and pressure piece 27 clamps the tongue 25.

As already stated, it is possible to mount a roller 6 on end pieces 24. Use can be made for this purpose of a drill marking arranged in end piece 24.

For the purpose of fastening the transverse elements 4 to lower profiles 8, use is made of the same fastening as for fastening vertical profiles 11 to profiles 8. Profiles 8 are provided for this purpose with a lateral slot 30 and a lateral cavity 31. It is herein noted that profile 8, with the exception of lateral slot 30, is symmetrical; lateral slot 30 is arranged for the option of fastening the transverse elements. It is also pointed out that transverse elements 4 are formed by the same profile as vertical profile parts 11; this also results in further rationalization.

It is finally noted that it is possible to assemble such a roof-rack with simple means. All that is necessary for this purpose are an open-end spanner and an Allen key. This provides the option of supplying the roof-rack as a construction kit.

Owing to the fact that use is made of aluminium profiles, it is possible to adjust the dimensions of the roof-rack by shortening the profiles. By including in a construction kit profiles which are suitable for making a large roof-rack, it is possible for the construction kit to be made to size during assembly by sawing profiles. This results in a further universality of use.

## Claims

1. Roof-rack for a motor vehicle, comprising:
- two structures extending in longitudinal direction,
- a number of transverse elements which extend between the structures and which are connected to the structures by means of fastening elements, and
- supports connected to the structures or the transverse elements for fixing the roof-rack on the motor vehicle,
**characterized in that** the fastening elements are fastened releasably to the structures.

2. Roof-rack as claimed in claim 1, **characterized in that** the fastening elements can be carried from a fixation position, in which they are fixedly connected to the structures, into a sliding position in which they are movable along the structures.

3. Roof-rack as claimed in claim 2, **characterized in that** the structures comprise a profile extending in longitudinal direction, and that the fastening elements extend into the profile and can be fixed in a random position on the profile.

4. Roof-rack as claimed in claim 3, **characterized in that** the fastening elements each comprise an anchor which extends into the profile, and that the fastening elements each comprise a tensioning element which is connected to the relevant transverse element and which is adapted for pulling the anchor towards it.

5. Roof-rack as claimed in claim 4, **characterized in that** the transverse elements are hollow, that the tensioning element is situated in the transverse elements, and that the tensioning elements comprise a control element which can be operated from outside the transverse element and which, when operated, pulls the anchor towards the fastening element.

6. Roof-rack as claimed in claim 5, **characterized in that** the tensioning elements comprise a sleeve which can be placed into an opening arranged in the transverse element, and that the control element comprises a bolt which is displaceable in the sleeve by means of screw thread and which is coupled mechanically to the anchor such that the anchor is pulled towards the bolt when the bolt is tightened.

7. Roof-rack as claimed in claim 6, **characterized in that** the bolt is provided with a conical end and that the anchor is provided with an at least partly oblique surface which is in contact with the conical part of the bolt.

8. Roof-rack as claimed in any of the claims 4-7, **characterized in that** a guide is arranged in the transverse elements for guiding a part of the anchor.

9. Roof-rack as claimed in claim 8, **characterized in that** the transverse elements are formed by an extruded aluminium profile.

10. Roof-rack as claimed in any of the foregoing claims, **characterized in that** the structures each comprise two identical profiles extending in longitudinal direction which are mutually connected by substantially vertically extending rods.

11. Roof-rack as claimed in claim 10, **characterized in that** the vertical rods are formed by the same aluminium profiles as the transverse elements, and that the vertical rods are connected to the longitudinally extending profiles in the same manner as the transverse profiles.

12. Roof-rack as claimed in claim 10 or 11, **characterized in that** the profiles extending one above another in longitudinal direction are mutually connected at their front and rear ends by identical end pieces.

13. Roof-rack as claimed in claim 12, **characterized in that** the end pieces are manufactured from plastic and that they are connected to the profiles extending in longitudinal direction by a clamping screw connection.

14. Kit of parts for assembling a roof-rack as claimed in any of the foregoing claims.
